(19) Europäisches Patentamt
European Patent Office
Office européen des brevets

(11) **EP 4 631 787 A1**

(12) **EUROPEAN PATENT APPLICATION**
published in accordance with Art. 153(4) EPC

(43) Date of publication:
**15.10.2025 Bulletin 2025/42**

(21) Application number: **23900569.7**

(22) Date of filing: **01.12.2023**

(51) International Patent Classification (IPC):
***B60Q 1/115*** (2006.01)

(52) Cooperative Patent Classification (CPC):
**B60Q 1/115**

(86) International application number:
**PCT/JP2023/043075**

(87) International publication number:
**WO 2024/122454 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2022 JP 2022195849**

(71) Applicant: **Koito Manufacturing Co., Ltd.**
**Shinagawa-ku, Tokyo 141-0001 (JP)**

(72) Inventors:
• **YAMAMOTO Hiroki**
  **Shizuoka-shi Shizuoka 424-8764 (JP)**
• **KOMATSU Motohiro**
  **Shizuoka-shi Shizuoka 424-8764 (JP)**
• **NODA Keisuke**
  **Shizuoka-shi Shizuoka 424-8764 (JP)**

(74) Representative: **Algemeen Octrooi- en Merkenbureau B.V.**
**P.O. Box 645**
**5600 AP Eindhoven (NL)**

(54) **VEHICLE LIGHT FITTING AND CONTROLLER FOR SAME**

(57) An adaptive driving beam lamp 110 has a plurality of independently luminance-controllable pixels PIX arranged in a matrix. The adaptive driving beam lamp 110 is structured to illuminate a first area 6 that contains a cutoff line CL in a low beam light distribution 4, with a first beam BM1 having an intensity distribution ascribed to a luminance distribution of the plurality of pixels PIX. A fixed light distribution lamp 150 is structured to cover a second area 8 that contains a lower end of the low beam light distribution 4, and to illuminate the second area 8 with a second beam BM2 having a fixed intensity distribution. A controller 130 is structured to set a predetermined luminance distribution independent of a pitch angle $\theta p$ of a vehicle body to the plurality of pixels PIX of the adaptive driving beam lamp 110, and to change a position of the cutoff line CL according to the pitch angle $\theta p$, so as to turn off at least one pixel PIX that corresponds to an area above the cutoff line CL.

FIG. 1

**Description**

TECHNICAL FIELD

The present disclosure relates to a vehicle lamp.

BACKGROUND ART

Light distribution pattern of vehicle headlamp is regulated by law, so as not to cause glare to nearby traffic participants. A vehicle body will have front-rear inclination that varies depending on the number of passengers and the weight of baggage. This varies inclination of the optical axis of the headlamp relative to the road face (ground face), whereby the illumination range of the headlamp shifts up and down. Upward shift of the illumination range would cause the glare, meanwhile downward shift would narrow the illumination range ahead of the vehicle.

The headlamp therefore has a built-in leveling actuator, aimed at correcting shift of the optical axis of the headlamp according to changes in the front-rear inclination of the vehicle body. A technology called auto-leveling has been known, which automatically controls the leveling actuator according to the inclination of the vehicle body. The auto-leveling is designed to acquire front-rear inclination of the vehicle body with use of a vehicle-borne sensor, and to use the actuator to correct the optical axis of a lamp unit in the headlamp, so as to cancel the inclination.

RELATED-ART LITERATURE

PATENT LITERATURE

Patent Literature 1: WO 2021-182151 A1
Patent Literature 2: WO 2021-200701 A1

SUMMARY OF INVENTION

TECHNICAL PROBLEM

Prior auto-leveling has been designed while focused on meeting the regulations that prohibit causing glare to nearby traffic participants, while leaving glare associated with sudden vibration of the traveling vehicle body acceptable in most cases.

The present disclosure has been made considering such situation, wherein exemplary one of the objects thereof is to provide a lamp system capable of providing good field of view regardless of changes in the vehicle posture.

SOLUTION TO PROBLEM

A vehicle lamp according to one embodiment of the present disclosure includes: an adaptive driving beam lamp having a plurality of independently luminance-controllable pixels arranged in a matrix, and being structured to illuminate a first area that contains a cutoff line in a low beam light distribution, with a first beam having an intensity distribution ascribed to a luminance distribution of the plurality of pixels; a fixed light distribution lamp structured to cover a second area that contains a lower end of the low beam light distribution, and to emit a second beam having a fixed intensity distribution; and a controller structured to set a predetermined luminance distribution independent of a pitch angle of a vehicle body to the plurality of pixels of the adaptive driving beam lamp, and to change a position of the cutoff line according to the pitch angle, so as to turn off at least one pixel that corresponds to an area above the cutoff line.

Another embodiment of the present disclosure relates to a controller of a vehicle lamp. The vehicle lamp includes: an adaptive driving beam lamp having a plurality of independently luminance-controllable pixels arranged in a matrix, and being structured to illuminate a first area that contains a cutoff line in a low beam light distribution, with a first beam having an intensity distribution ascribed to a luminance distribution of the plurality of pixels; and a fixed light distribution lamp structured to cover a second area that contains a lower end of the low beam light distribution, and to emit a second beam having a fixed intensity distribution. The controller is structured to set a predetermined luminance distribution independent of a pitch angle of a vehicle body to the plurality of pixels of the adaptive driving beam lamp, and to change a position of the cutoff line according to the pitch angle, so as to turn off at least one pixel that corresponds to an area above the cutoff line.

Note that also free combinations of these constituents, and also any of the constituents and expressions exchanged among the method, apparatus, and system, are valid as the modes of the present disclosure. Also note that the description of this section (SOLUTION TO PROBLEM) does not describe all essential features of the invention, and thus also subcombinations of these features described may constitute the invention.

ADVANTAGEOUS EFFECTS OF INVENTION

One embodiment of the present disclosure can provide a good field of view, regardless of changes in the vehicle posture.

BRIEF DESCRIPTION OF DRAWINGS

[Fig. 1] Fig. 1 is a block diagram illustrating a lamp system according to one embodiment.
[Fig. 2] Fig. 2 is a diagram illustrating formation of a low beam light distribution by the lamp system illustrated in Fig. 1.
[Fig. 3] Fig. 3 is a diagram for explaining control of low beam light distribution, according to fluctuation of pitch angle $\theta$p.
[Fig. 4] Fig. 4 is a functional block diagram of a controller.
[Fig. 5] Fig. 5 is a diagram for explaining arithmetic processing by the controller illustrated in Fig. 4.

DESCRIPTION OF EMBODIMENTS

(Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. Also note this outline is not an extensive overview of all possible embodiments, and is therefore not intended to limit any constituent indispensable for the embodiments. For convenience, the wording "one embodiment" may be used to designate a single embodiment (Example or Modified Example), or a plurality of embodiments (Examples or Modified Examples) disclosed in the present specification.

A vehicle lamp according to one embodiment includes:
an adaptive driving beam lamp having a plurality of independently luminance-controllable pixels arranged in a matrix, and being structured to illuminate a first area that contains a cutoff line in a low beam light distribution, with a first beam having an intensity distribution ascribed to a luminance distribution of the plurality of pixels; a fixed light distribution lamp structured to cover a second area that contains a lower end of the low beam light distribution, and to emit a second beam having a fixed intensity distribution; and a controller structured to set a predetermined luminance distribution independent of a pitch angle of a vehicle body to the plurality of pixels of the adaptive driving beam lamp, and to change a position of the cutoff line according to the pitch angle, so as to turn off at least one pixel that corresponds to an area above the cutoff line.

With this structure, glare in case of vehicle sink on the rear side (nose-up) may be prevented, by descending the cut-off line, meanwhile far field of view in case of vehicle sink on the front side (nose-dive) may be prevented from dimming, by elevating the cut-off line. In addition, with the control made adaptive to dynamic changes in the pitch angle of the vehicle body, the level of the cut-off line may be kept constant on a virtual perpendicular screen ahead of the vehicle, even if the vehicle body causes front-rear vibration, thereby preventing an object ahead of the vehicle from being looked bright and dark, and thus successfully providing an improved field of view. Furthermore, the intensity distribution of a part where the first beam and the second beam overlap is kept constant regardless of the pitch angle, thus making it possible to prevent flickering. Accordingly this invention can provide a good field of view regardless of changes in the vehicle posture.

In one embodiment, the controller may store a first image having the number of pixels in a horizontal direction equal to the number of pixels in a horizontal direction of the plurality of pixels, and the number of pixels in a vertical direction equal to the number of pixels in a vertical direction of the plurality of pixels, and having a predetermined luminance distribution mapped thereon; and a second image having the number of pixels in the horizontal direction equal to the number of pixels in the horizontal direction of the plurality of pixels, and the number of pixels in the vertical direction larger than the number of pixels in the vertical direction of the plurality of pixels, and having an area above the cutoff line filled with a first value, and an area below the cutoff line filled with a second value. The controller may select a part that corresponds to the pitch angle, from the second image to create a third image, and may arithmetically process the third image and the first image, to create a fourth image to be set on the adaptive driving beam lamp.

(Embodiments)

Preferred embodiments will be explained below, referring to the attached drawings. All similar or equivalent constituents, members and processes illustrated in the individual drawings will be given same reference signs, so as to properly avoid redundant explanations. The embodiments are merely illustrative, and are not restrictive about the disclosure. All features and combinations thereof described in the embodiments are not always essential to the disclosure.

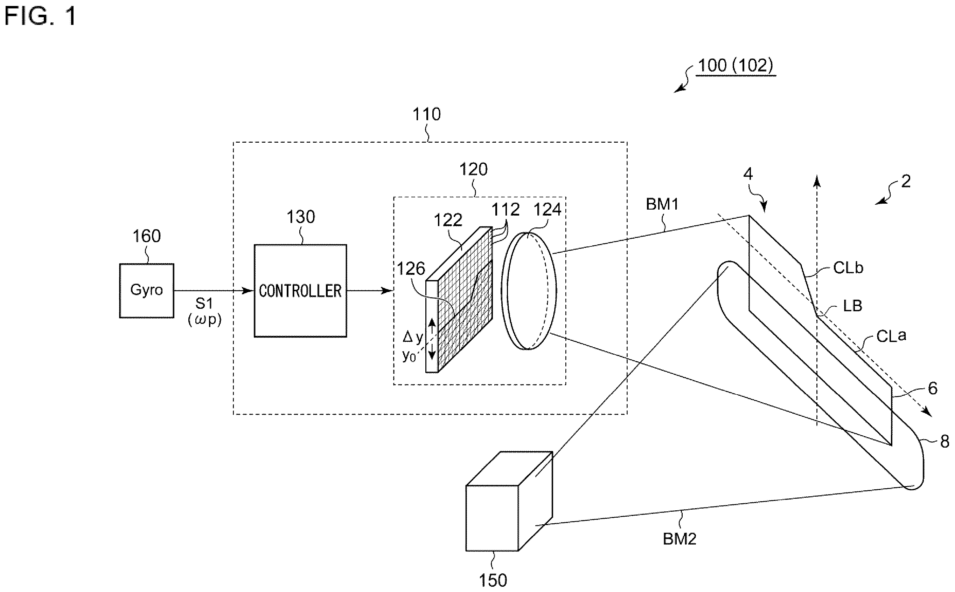

Fig. 1 is a block diagram illustrating a lamp system 100 according to one embodiment. The lamp system 100 is mounted on an automobile, and functions as a headlamp structured to illuminate a field of view ahead of the vehicle. A part of, or the entire of the lamp system 100 constitutes a vehicle lamp 102.

The automobile can vary the angle of inclination in the front-rear direction, depending on front-rear weight balance or vehicle motion. The angle of inclination in the front-rear direction corresponds to pitching about a horizontal axis (pitch axis) that extends in the left-right direction of the vehicle body, and is referred to as pitch angle $\theta p$.

The lamp system 100 has a function that automatically adjusts an optical axis of the headlamp in the pitching direction, according to the pitch angle $\theta p$ (auto-leveling function).

The lamp system 100 has an adaptive driving beam lamp 110, a fixed light distribution lamp 150, and an inclination sensor 160.

The adaptive driving beam lamp 110 and the fixed light distribution lamp 150 illuminate different areas in the low beam light distribution. Fig. 1 schematically illustrates a virtual perpendicular screen 2, on which a low beam light distribution 4 is schematically illustrated.

The adaptive driving beam lamp 110 covers a first area 6 that contains a cutoff line (upper end) CL, in the upper part of the low beam light distribution 4. On the other hand, the fixed light distribution lamp 150 covers a second area 8 that contains a lower end of the low beam light distribution 4. The second area 8 is referred to as a diffused low beam light distribution. The first are 6 and the second area 8 are overlapped. The cutoff line CL contains a horizontal cutoff line CLa and an oblique cutoff line CLb, which intersect at an elbow point LB.

Note that the adaptive driving beam lamp 110 also serves as a light source for high beam illumination, and also functions as a so-called ADB lamp.

The adaptive driving beam lamp 110 has a high-definition lamp unit 120 and a controller 130. The high-definition lamp unit 120 contains a light-emitting element array 122, and an illumination optical system 124. The light-emitting element array 122 contains a plurality of pixels PIX arranged in a matrix. Luminance of the individual pixels PIX are independently controllable at multiple gradation levels. The light-emitting element array 122 usable herein may be an LED array.

The controller 130 controls the luminance of the plurality of pixels PIX of the light-emitting element array 122. The illumination optical system 124 projects an output light from the light-emitting element array 122, ahead of the vehicle. The illumination optical system 124 may be a lens optical system, a reflective optical system, or a combination of these systems.

Note that correspondence between a position of a certain pixel and an illumination area on the virtual perpendicular screen 2 ascribed to the pixel is determined by the illumination optical system 124, and may be occasionally given in a mirror image relation (left-right inversion), up-down inversion, or up-down and left-right inversion.

The high-definition lamp unit 120 illuminates a first area 6 that contains the cutoff line CL in the low beam light distribution 4, with a first beam BM1 having an intensity distribution ascribed to a luminance distribution of the plurality of pixels PIX.

The fixed light distribution lamp 150 covers a second area 8 that contains a lower end of the low beam light distribution 4 and overlaps a part of the first area 6, and illuminates the second area 8 with a second beam BM2 having a fixed intensity distribution.

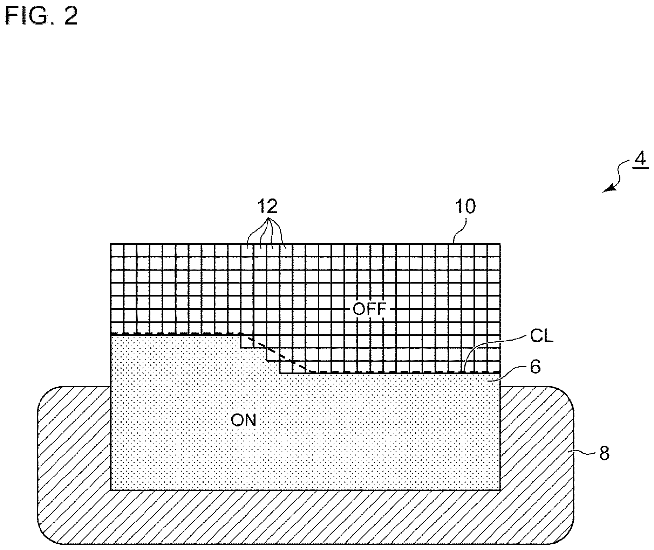

Fig. 2 is a diagram for explaining formation of the low beam light distribution 4 by the lamp system 100 illustrated in Fig. 1. A rectangle indicates the illuminatable range 10 by the adaptive driving beam lamp 110. The illuminatable range 10 is divided into a plurality of meshes (sub-regions) 12 that correspond to the plurality of pixels PIX. Illuminance of each mesh 12 is ascribed to the luminance of the corresponding pixel PIX.

With all the pixels of the light-emitting element array 122 turned on, all the meshes 12 in the illuminatable range 10 are illuminated with the first beam BM1. With a part of the pixels PIX of the light-emitting element array 122 turned off, the illuminance of the mesh 12 that corresponds to such pixel will be substantially zero. Note that the pixel PIX being turned off is not limited to a case where the luminance is zero, that is, a case where the illuminance of the corresponding mesh 12 is zero, but may include a case where the luminance is very small, that is, a case where the illuminance of the corresponding mesh 12 is not zero but is very small.

The controller 130 turns off the pixels corresponding to the meshes 12 above the cutoff line CL, meanwhile turns on the pixels corresponding to the meshes 12 below the cutoff line CL, to form the first area 6 that contains the cutoff line CL in the low beam light distribution 4.

The first area 6 below the cutoff line CL has an illuminance which is not uniform but with a certain distribution. This will be described later.

Referring now back to Fig. 1, the inclination sensor 160 is structured to detect an angle of rotation (pitch angle) about the pitch axis of the vehicle body. The controller 130 can generate the pitch angle $\theta p$ of the vehicle body, with reference to an output S1 of the inclination sensor 160. For example, the inclination sensor 160 usable herein may be a gyro sensor. The controller 130 can generate the pitch angle $\theta p$, by integrating angular velocity $\omega p$ about the pitch axis generated by the gyro sensor. The inclination sensor 160 may be provided in a housing of the headlamp, or may be externally attached to the housing of the headlamp. Alternatively, the inclination sensor 160 may be provided to the vehicle body.

In this embodiment, the controller 130 corrects position of the cutoff line CL in the low beam light distribution 4 in a dynamic and adaptive manner, according to fluctuation of the pitch angle $\theta p$ ascribed to various factors during stop and travel of the vehicle.

The controller 130 sets a predetermined luminance distribution independent of the pitch angle $\theta p$ of the vehicle body, to the plurality of pixels PIX of the light-emitting element array 122. The controller 130 also shifts the position in the height direction of a boundary 126 between an on-pixel region and an off-pixel region among the plurality of pixels PIX, so that the position of the cutoff line CL will be variable according to the pitch angle $\theta p$.

The structure of the lamp system 100 has been described above.

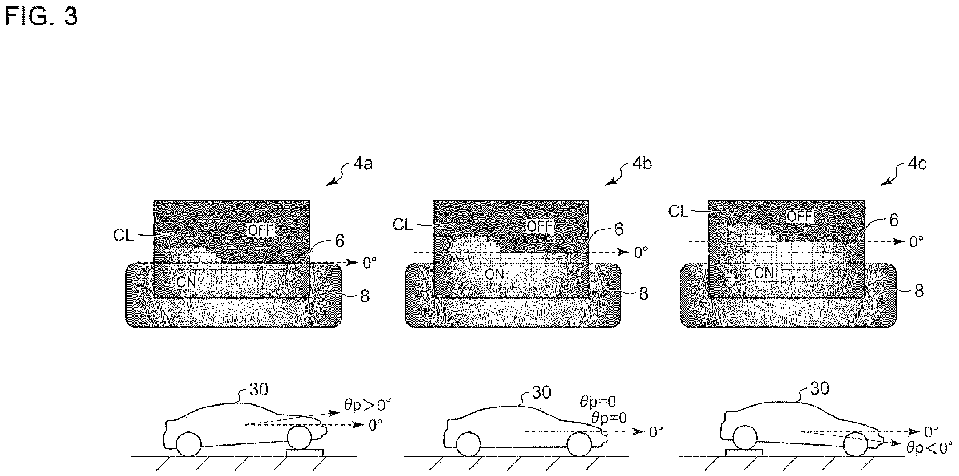

Fig. 3 is a diagram for explaining control of the low beam light distribution 4, according to fluctuation of a pitch angle $\theta p$. Fig. 3 illustrates, on the left thereof, a low beam light distribution 4a of the vehicle body 30 in a nose-up posture ($\theta p > 0°$). Fig. 3 illustrates, at the center thereof, a low beam light distribution 4b of the vehicle body 30 with no inclination ($\theta p = 0°$). Fig. 3 illustrates, on the right thereof, a low beam light distribution 4c of the vehicle body 30 in a nose-dive posture ($\theta p < 0°$). The numeral 0° indicates an angle horizontal to the road face. Shading in the diagram represents the illuminance of the individual meshes.

The second area 8 formed by the fixed light distribution lamp 150 shifts up and down as the pitch angle $\theta p$ changes, relative to the horizontal level at 0°. Meanwhile, the first area 6 is formed by the adaptive driving beam lamp 110 so as to keep the level of height of the cutoff line CL close to the horizontal level at 0° (specifically, -0.57°) even if the pitch angle $\theta p$ would change, for which the position of the boundary between the on-pixel region and the off-pixel region among the plurality of pixels PIX is controlled.

On the other hand, the plurality of pixels PIX have set thereon a predetermined luminance distribution independent of the pitch angle $\theta p$ of the vehicle body 30. Therefore, if focused on one pixel in the on-pixel region, the pixel keeps the luminance constant regardless of the pitch angle $\theta p$, thus making the illuminance of each mesh kept constant regardless of the pitch angle $\theta p$.

The operation of the lamp system 100 has been described above.

With this lamp system 100, the cutoff line CL is controlled so as to keep a substantially horizontal level, even if the vehicle body is in the nose-up or nose-dive posture. This successfully provides the driver with a good field of view.

The lamp system 100 further has the following advantages. Referring now to Fig. 3, a focus will now be placed on an overlap region between the first area 6 and the second area 8. The overlap region, if the illuminance fluctuates therein according to the pitch angle $\theta p$, would be recognized by the driver undesirably as an uneven light distribution.

In this embodiment, the first area 6 and the second area 8 will have constant illuminance distribution in the overlap region, regardless of the pitch angle $\theta p$. Hence, the illuminance distribution (or illuminance) in the overlap region will not fluctuate, even if the pitch angle $\theta p$ fluctuates. This successfully suppresses the uneven light distribution.

Next, an exemplary processing of the controller 130 will be described.

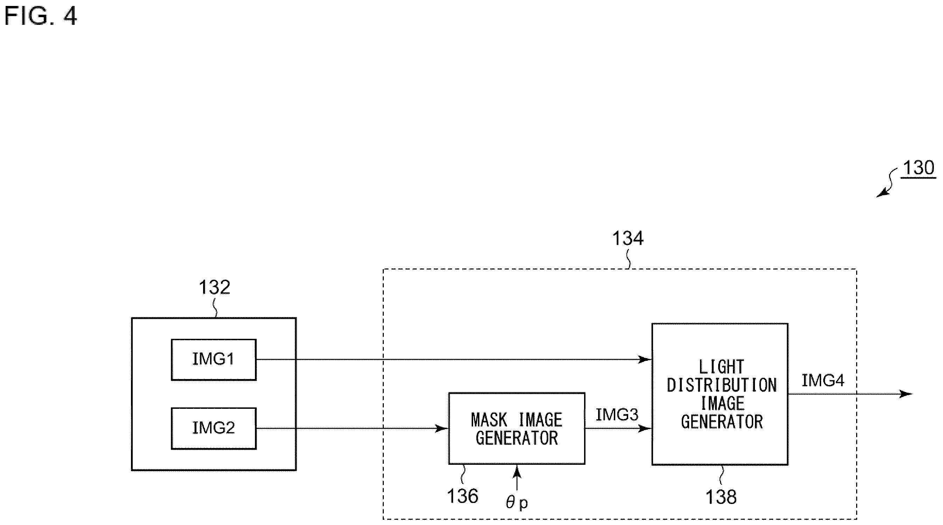

Fig. 4 is a functional block diagram of the controller 130. The controller 130 has a memory 132 and an arithmetic processor 134. The memory 132 stores a first image IMG1 and a second image IMG2. The first image IMG1 has the number of pixels in the horizontal direction equal to the number of pixels in the horizontal direction of the light-emitting element array 122, and the number of pixels in the vertical direction equal to the number of pixels in the vertical direction of the light-emitting element array 122. The first image IMG1 has mapped thereon a predetermined luminance distribution. The first image IMG1 is also referred to as a base light distribution image.

The second image IMG2 has the number of pixels in the horizontal direction equal to the number of pixels in the horizontal direction of the light-emitting element array 122, and the number of pixels in the vertical direction larger than the number of pixels in the vertical direction of the light-emitting element array 122. The second image IMG2 has an area above the cutoff line CL filled with a first value (0, for example), and has an area below filled with a second value (1, for example).

A mask image generator 136 selects a part that corresponds to the pitch angle $\theta p$, from the second image IMG2 to create a third image IMG3. The third image IMG3 is also referred to as a mask image. The third image IMG3 has the numbers of pixels in the horizontal and vertical directions, equal to the numbers of pixels in the horizontal and vertical directions of the light-emitting element array 122, respectively.

A light distribution image generator 138 arithmetically processes the third image IMG3 and the first image IMG1, to generate a fourth image IMG4 to be set on the light emitting element array 122 of the adaptive driving beam lamp 110. The fourth image IMG4 is also referred to as a light distribution image.

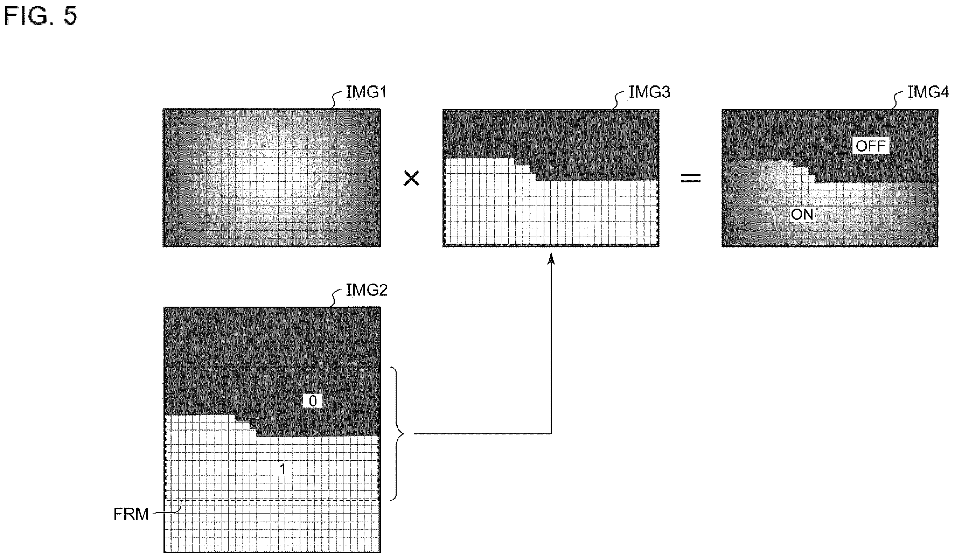

Fig. 5 is a diagram for explaining the processing by the controller 130 illustrated in Fig. 4. The first image IMG1 has a predetermined luminance distribution more brighter towards the center, and more darker towards the outer circumference. The second image IMG2 has an area above the cutoff line CL filled with the first value 0, and has an area below the cutoff line CL filled with the second value 1.

The mask image generator 136 applies a frame FRM to the second image IMG2, and outputs the pixels within the frame as the third image IMG3. The position of the frame FRM in the height direction is controlled according to the pitch angle θp. More specifically, the larger the pitch angle θp (θp > 0°), the more the position of the frame FRM moves upwards, meanwhile, the smaller the pitch angle θp (θp < 0°), the more the position of the frame FRM moves downwards.

A light distribution image generator 138 arithmetically processes the first image IMG1 and the third image IMG3, to generate the fourth image IMG4. For example, the light distribution image generator 138 replaces each pixel in the first image IMG1 with zero (or a sufficiently small value), if the corresponding pixel in the third image IMG3 has a value of zero. The light distribution image generator 138 may alternatively generate the fourth image IMG4, with use of the equation below.

$$IMG4(x,y) = IMG1(x,y) \times IMG3(x,y)$$

(Modified Example)

Although the embodiments employed a gyro sensor as the inclination sensor 160, the present disclosure is not limited thereto. The inclination sensor 160 may alternatively be a pair of vehicle height sensors attached to the front and rear of the vehicle body.

Having described the present disclosure with use of specific terms referring to the embodiments, the embodiments merely illustrate the principle and applications of the present disclosure, allowing a variety of modifications and layout change without departing from the spirit of the present disclosure specified by the claims.

INDUSTRIAL APPLICABILITY

The present disclosure relates to a vehicle lamp.

REFERENCE SIGNS LIST

100 lamp system, 110 adaptive driving beam lamp, 120 high-definition lamp unit, 122 light emitting element array, 124 illumination optical system, PIX pixel, 130 controller, 132 memory, 134 arithmetic processor, 136 mask image generator, 138 light distribution image generator, 150 fixed light distribution lamp, 160 inclination sensor, BM1 first beam, BM2 second beam, 6 first area, 8 second area

**Claims**

1. A vehicle lamp comprising:

   an adaptive driving beam lamp having a plurality of independently luminance-controllable pixels arranged in a matrix, and being structured to illuminate a first area that contains a cutoff line in a low beam light distribution, with a first beam ascribed to a luminance distribution of the plurality of pixels;
   a fixed light distribution lamp structured to cover a second area that contains a lower end of the low beam light distribution, and to illuminate the second area with a second beam having a fixed light distribution; and
   a controller structured to set a predetermined luminance distribution independent of a pitch angle of a vehicle body to the plurality of pixels of the adaptive driving beam lamp, and to change a position of the cutoff line according to the pitch angle, so as to turn off at least one pixel that corresponds to an area above the cutoff line.

2. The vehicle lamp according to claim 1, wherein
   the controller stores:

   a first image having the number of pixels in a horizontal direction equal to the number of pixels in a horizontal direction of the plurality of pixels, and the number of pixels in a vertical direction equal to the number of pixels in a vertical direction of the plurality of pixels, and having a predetermined luminance distribution mapped thereon; and
   a second image having the number of pixels in the horizontal direction equal to the number of pixels in the horizontal direction of the plurality of pixels, and the number of pixels in the vertical direction larger than the number of pixels in the vertical direction of the plurality of pixels, and having an area above the cutoff line filled with a first value, and an area below the cutoff line filled with a second value,
the controller being structured to select a part that corresponds to the pitch angle, from the second image to create a third image, and to arithmetically process the third image and the first image, to create a fourth image to be set on the adaptive driving beam lamp.

3. A controller for controlling an adaptive driving beam lamp used in combination with a fixed light distribution lamp,

the adaptive driving beam lamp having a plurality of independently luminance-controllable pixels arranged in a matrix, and being structured to illuminate a first area that contains a cutoff line in a low beam light distribution, with a first beam ascribed to a luminance distribution of the plurality of pixels;
a fixed light distribution lamp being structured to cover a second area that contains a lower end of the low beam light distribution, and to illuminate the second area with a second beam having a fixed light distribution;
the controller being structured to set a predetermined luminance distribution independent of a pitch angle of a vehicle body to the plurality of pixels of the adaptive driving beam lamp, and to change a position of the cutoff line according to the pitch angle, so as to turn off at least one pixel that corresponds to an area above the cutoff line.

4. The controller according to claim 3, being structured to store:

a first image having the number of pixels in a horizontal direction equal to the number of pixels in a horizontal direction of the plurality of pixels, and the number of pixels in a vertical direction equal to the number of pixels in a vertical direction of the plurality of pixels, and having a predetermined luminance distribution mapped thereon; and
a second image having the number of pixels in the horizontal direction equal to the number of pixels in the horizontal direction of the plurality of pixels, and the number of pixels in the vertical direction larger than the number of pixels in the vertical direction of the plurality of pixels, and having an area above the cutoff line filled with a first value, and an area below the cutoff line filled with a second value,
the controller being structured to select a part that corresponds to the pitch angle, from the second image to create a third image, and to arithmetically process the third image and the first image, to create a fourth image to be set on the adaptive driving beam lamp.

FIG. 1

FIG. 2

# FIG. 3

FIG. 4

EP 4 631 787 A1

# FIG. 5

IMG1 × IMG3 = IMG4

IMG4 contains: OFF, ON

IMG2 contains: 0, 1

FRM

## INTERNATIONAL SEARCH REPORT

| International application No. |
| --- |
| **PCT/JP2023/043075** |

| A. | CLASSIFICATION OF SUBJECT MATTER |
| --- | --- |

***B60Q 1/115***(2006.01)i
FI:   B60Q1/115

According to International Patent Classification (IPC) or to both national classification and IPC

| B. | FIELDS SEARCHED |
| --- | --- |

Minimum documentation searched (classification system followed by classification symbols)

B60Q1/115

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/131044 A1 (KOITO MANUFACTURING CO., LTD.) 23 June 2022 (2022-06-23) entire text, all drawings | 1-4 |
| A | WO 2021/193702 A1 (KOITO MANUFACTURING CO., LTD.) 30 September 2021 (2021-09-30) entire text, all drawings | 1-4 |
| A | WO 2021/182151 A1 (KOITO MANUFACTURING CO., LTD.) 16 September 2021 (2021-09-16) entire text, all drawings | 1-4 |
| A | WO 2021/200701 A1 (KOITO MANUFACTURING CO., LTD.) 07 October 2021 (2021-10-07) entire text, all drawings | 1-4 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 January 2024** | **30 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 631 787 A1

## INTERNATIONAL SEARCH REPORT
### Information on patent family members

International application No.

**PCT/JP2023/043075**

| Patent document cited in search report | | | Publication date (day/month/year) | Patent family member(s) | | | Publication date (day/month/year) |
|---|---|---|---|---|---|---|---|
| WO | 2022/131044 | A1 | 23 June 2022 | CN | 116568558 | A | |
| WO | 2021/193702 | A1 | 30 September 2021 | US | 2023/0019153 | A1 | |
| | | | | entire text, all drawings | | | |
| | | | | CN | 115362084 | A | |
| WO | 2021/182151 | A1 | 16 September 2021 | US | 2023/0098917 | A1 | |
| | | | | entire text, all drawings | | | |
| | | | | CN | 115280065 | A | |
| WO | 2021/200701 | A1 | 07 October 2021 | US | 2023/0142677 | A1 | |
| | | | | entire text, all drawings | | | |
| | | | | EP | 4129760 | A1 | |
| | | | | CN | 115362086 | A | |

Form PCT/ISA/210 (patent family annex) (July 2022)

**REFERENCES CITED IN THE DESCRIPTION**

**Patent documents cited in the description**

- WO 2021182151 A1

- WO 2021200701 A1